# FASCICULE DE BREVET EUROPEEN

(11) **EP 1 142 784 B1**
(45) Date de publication et mention de la délivrance du brevet: **30.06.2004**
(21) Numéro de dépôt: 01400864.3
(22) Date de dépôt: 04.04.2001
(51) Int. Cl.: B64D 25/14

(54) **Porte d'aéronef et aéronef équipé d'une telle porte**
Flugzeugtür und damit ausgerüstetes Flugzeug
Aircraft door and aircraft equipped with such a door

(30) Priorité: 07.04.2000 FR 0004483
(43) Date de publication de la demande: 10.10.2001
(73) Titulaire: AIRBUS France, 31060 Toulouse (FR)
(72) Inventeur: Dazet, Francis, 31140 Saint-Alban (FR); Depeige, Alain, 31170 Tournefeuille (FR); Rouyre, François, 31700 Cornebarrieu (FR); Debanne, Ludovic, 31830 Plaisance du Touch (FR)
(74) Mandataire: Ilgart, Jean-Christophe

(56) Documents cités:
- EP-A- 0 009 379
- WO-A-84/01140
- US-A- 3 771 749

## Description

### Domaine technique

L'invention concerne une porte d'aéronef. Plus précisément, elle concerne une porte permettant à des passagers d'accéder à l'intérieur de l'aéronef, ladite porte intégrant un toboggan d'évacuation de secours.

L'invention concerne également un aéronef équipé d'au moins une porte de ce type.

### Etat de la technique

Sur les aéronefs destinés au transport des passagers, les réglementations imposent la présence de toboggans d'évacuation de secours aptes à permettre une évacuation rapide des passagers lors d'un accident.

Les toboggans d'évacuation de secours sont habituellement constitués par des structures gonflables, qui sont stockées à l'état replié, dans un emplacement prévu à cet effet à l'intérieur de l'aéronef.

Par ailleurs, les emplacements dans lesquels sont stockés les toboggans sont choisis afin qu'en cas d'accident, les toboggans se déploient en dessous d'au moins certaines des issues de l'aéronef, susceptibles d'être ouvertes dans des conditions accidentelles. Ces issues peuvent être des portes servant habituellement au chargement et au déchargement des passagers ou des issues de secours utilisables uniquement dans des conditions accidentelles.

Les impératifs rappelés ci-dessus conduisent les constructeurs d'aéronefs soit à intégrer les emplacements de stockage des toboggans dans les portes susceptibles d'être utilisées en cas d'accident, soit à intégrer ces emplacements dans le fuselage, juste en dessous des portes ou dans des carénages, à proximité des portes.

Dans le premier cas, la solution la plus couramment utilisée consiste à loger le toboggan d'évacuation de secours sous un capot formant un renflement vers l'intérieur de l'aéronef, dans la partie basse de la porte. Lorsque la porte est fermée après le chargement des passagers, le personnel de bord arme un système permettant de relier mécaniquement le toboggan logé dans le bas de la porte au seuil de celle-ci.

En cas d'accident, le toboggan est donc lié au seuil de la porte. Lorsque celle-ci est ouverte, le toboggan se déploie automatiquement vers l'extérieur de l'aéronef en se gonflant sous l'action de moyens prévus à cet effet, généralement sous le seuil de la porte.

Parmi les documents qui illustrent ce mode de stockage des toboggans, on citera à titre d'exemples les documents US-A-3 771 749, US-A-4 106 729, WO-A-84/01140 et WO-A-96/40556.

Cette solution classique a notamment pour inconvénient d'imposer le passage du toboggan par une fente formée dans le bas de la porte, lorsque celle-ci est ouverte en situation d'évacuation d'urgence. Le temps nécessaire au déploiement du toboggan augmente donc avec son volume. Or, celui-ci est d'autant plus grand que les aéronefs sont de grandes tailles et, en particulier que la hauteur de la porte par rapport au sol est importante. En effet, le volume du toboggan replié augmente naturellement avec sa longueur déployée, qui doit permettre de relier le seuil de la porte au sol dans toutes les postures susceptibles d'être prises par l'aéronef en cas d'accident.

Par ailleurs, du fait que le déploiement des toboggans s'effectue habituellement par des fentes formées dans le bas des portes, les toboggans sont nécessairement stockés dans des logements qui sont également situés dans le bas des portes. Cela entraîne la présence de renflements dans le bas des portes, dans la cabine des passagers. Ces renflements se traduisent par une perte de place et interdisent de placer des sièges immédiatement derrière des portes ainsi conçues.

De plus, dans le cas de toboggans de très grande longueur, le volume occupé par les renflements formés en bas de portes peut rendre inutilisables les mécanismes assurant habituellement l'ouverture des portes. En effet, la protubérance servant à loger le toboggan interférerait alors avec le cadre de la porte. Dans ce cas, le recours à une autre solution est impératif.

Il est également connu, comme l'enseigne notamment le document EP-A-0 518 461, de loger les toboggans d'évacuation de secours dans des emplacements intégrés dans le fuselage de l'aéronef, en dessous des seuils de portes.

Cette solution ne présente pas les inconvénients de la précédente puisque le volume servant à loger le toboggan est dissocié de la porte. Toutefois, elle conduit à pratiquer des ouvertures supplémentaires dans le fuselage de l'aéronef, sur la même section que les ouvertures des portes. Pour éviter une fragilisation de la structure de l'aéronef à ce niveau, des renforts doivent être prévus, ce qui n'est pas sans conséquence sur la masse et le coût de l'appareil.

Par ailleurs, le document EP-A-0 009 379 décrit une issue de secours permettant l'évacuation d'un bâtiment, d'un bateau ou d'un aéronef. Elle comprend un cadre rectangulaire fixe, un boîtier formant porte, dont le bord inférieur est articulé sur le cadre et un toboggan gonflable logé dans le boîtier. L'actionnement d'un verrou déclenche le pivotement du boîtier vers l'extérieur et le gonflement du toboggan.

### Exposé de l'invention

L'invention a précisément pour objet une porte d'aéronef dont la conception originale lui permet d'intégrer un toboggan d'évacuation de secours de grande longueur sans augmenter de façon inacceptable son temps de déploiement, tout en évitant d'avoir recours à un emplacement séparé, intégré sous le seuil de la porte, dans le fuselage de l'aéronef.

Conformément à l'invention, ce résultat est obtenu au moyen d'une porte d'aéronef, comprenant une structure rigide présentant une face tournée vers l'extérieur de l'aéronef, ladite structure rigide intégrant un logement apte à recevoir un toboggan d'évacuation de secours, dans un état replié, caractérisée en ce que le logement est délimité, sur ladite face de la structure rigide, par un capot apte à s'ouvrir pour permettre un déploiement du toboggan à l'extérieur de l'aéronef.

Cette conception originale permet d'assurer un déploiement très rapide du toboggan, quel que soit sa taille, ce qui rend l'invention particulièrement adaptée au cas d'aéronefs de très grande taille, dans lesquels le plancher de la cabine des passagers est éloigné du sol.

Dans un premier mode de réalisation de l'invention, le logement dans lequel est stocké le toboggan d'évacuation de secours s'étend sur la majeure partie de la surface de la porte. Cet agencement particulier du logement dans lequel est replié le toboggan d'évacuation de secours, sur la majeure partie de la surface de la porte, permet d'en réduire sensiblement l'épaisseur, par rapport à un logement situé en bas de porte, pour un volume identique. Par conséquent, il n'existe pas de protubérance importante vers l'intérieur de l'aéronef.

Dans ce premier mode de réalisation de l'invention, le logement est délimité avantageusement, vers l'intérieur de l'aéronef, par une cloison intermédiaire sensiblement parallèle au capot, de telle sorte que le logement présente une épaisseur sensiblement uniforme. De préférence, le logement est aussi délimité latéralement et vers le haut par un cadre en forme de U inversé.

Dans ce cas, le capot est avantageusement lié au cadre par des moyens de fixation déconnectables de façon à pouvoir être éjecté vers l'extérieur de l'aéronef.

La cloison de fond fait toujours partie intégrante de la structure rigide de la porte. Selon le cas, le cadre fait également partie intégrante de la structure rigide ou est rapporté sur cette structure.

Par ailleurs, des moyens d'étanchéité sont prévus, de façon habituelle, autour de la porte. Selon le cas, ces moyens d'étanchéité peuvent être situés soit sensiblement dans le prolongement de la cloison intermédiaire, soit sensiblement dans le prolongement du capot. Cette dernière solution est préférée, car elle permet de réduire les bruits aérodynamiques engendrés par la cavité formée par l'interstice porte-fuselage.

Avantageusement, la porte comprend également un bord inférieur en gradin, comportant une partie intérieure fermée et une partie extérieure ouverte, communiquant avec le volume dans lequel est reçu le toboggan et décalée vers le bas par rapport à la partie intérieure fermée, de façon à former une marche. Cet agencement permet d'accroître légèrement le volume disponible pour le toboggan, sans trop augmenter la taille de l'ouverture réalisée dans le fuselage de l'aéronef.

Selon un deuxième mode de réalisation de l'invention, le capot est lié à la structure rigide par des moyens de fixation déconnectables et des moyens d'armement désarmement sont prévus entre un bord inférieur du capot et le seuil de la porte.

Dans ce cas, les moyens d'armement désarmement peuvent comprendre au moins une manille montée sur le bord inférieur du capot, un réceptacle formé sur le seuil de la porte et un crochet articulé sur le seuil de la porte, de façon à pouvoir emprisonner la manille entre le réceptacle et le crochet.

En variante, les moyens d'armement désarmement peuvent aussi comprendre au moins un axe monté sur le bord inférieur du capot et un loquet à fente, monté pivotant sur le seuil de la porte, de façon à pouvoir emprisonner ledit axe dans la fente du loquet.

Par ailleurs, l'invention a également pour objet un aéronef comprenant au moins une porte telle que définie ci-dessus.

### Brève description des dessins

On décrira à présent, à titre d'exemples non limitatifs, différents modes de réalisation de l'invention, en se référant aux dessins annexés, dans lesquels :
- la figure 1 est une vue en perspective qui représente schématiquement, depuis l'extérieur d'un aéronef, une porte d'accès dont le capot a été volontairement omis pour montrer le volume dans lequel peut être placé un toboggan, conformément à l'invention ;
- la figure 2 est une vue en coupe verticale de la porte illustrée sur la figure 1 ;
- la figure 3 est une vue en coupe horizontale de la porte de la figure 1, illustrant un premier mode de réalisation de l'invention ;
- la figure 4 est une vue en coupe horizontale comparable à la figure 3, illustrant un deuxième mode de réalisation de l'invention ;
- la figure 5 est une vue en coupe horizontale comparable aux figures 3 et 4, illustrant un troisième mode de réalisation de l'invention ;
- la figure 6 est une vue en perspective représentant une porte d'aéronef réalisée selon un quatrième mode de réalisation de l'invention, après ouverture du capot et déploiement du toboggan ;
- la figure 7 est une vue en coupe illustrant à plus grande échelle l'un des mécanismes aptes à relier le capot au seuil de la porte, dans le mode de réalisation de la figure 6, en fonctionnement normal ;
- la figure 8 est une vue comparable à la figure 7, illustrant le mécanisme après ouverture du capot ; et
- la figure 9 est une vue comparable à la figure 8, illustrant une variante du quatrième mode de réalisation de l'invention.

### Description détaillée de modes de réalisation préférés de l'invention

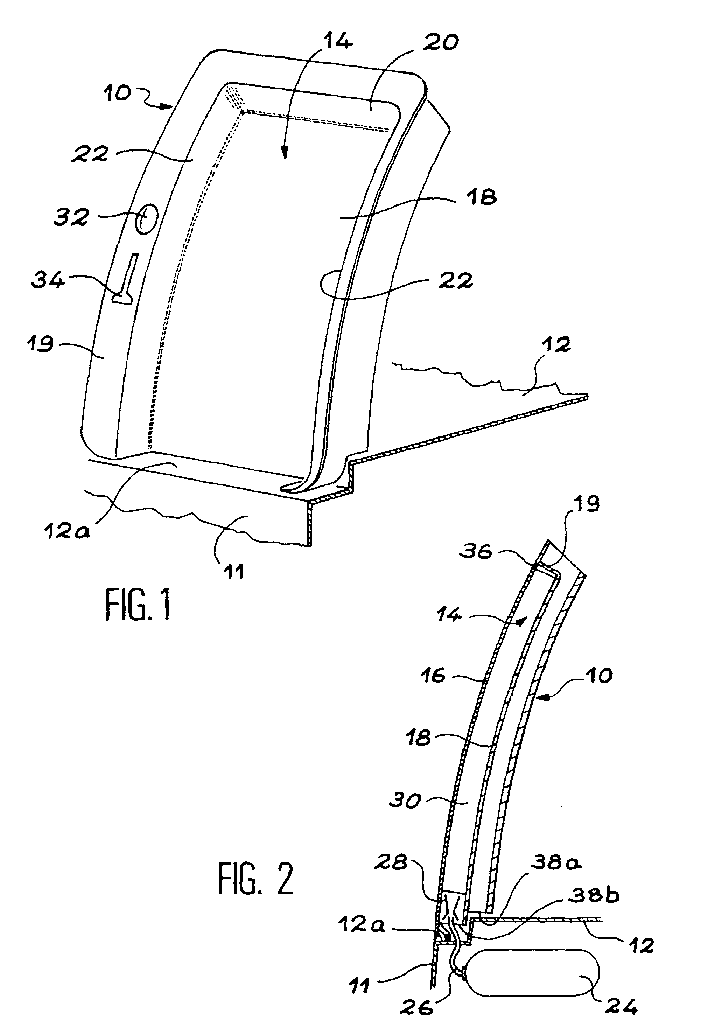

Sur la figure 1, on a représenté schématiquement une porte d'aéronef 10 conforme à l'invention. La porte 10 est une porte permettant à des passagers d'accéder à la cabine prévue pour les recevoir à l'intérieur de l'aéronef. Seule une partie du plancher 12 de cette cabine apparaît sur la figure 1.

La porte 10 présente généralement une forme sensiblement rectangulaire, et elle est incurvée afin que sa surface extérieure soit située dans le prolongement de la surface extérieure du fuselage 11, lorsqu'elle est fermée. La porte 10 obture alors une ouverture de forme complémentaire prévue dans le fuselage 11 de l'aéronef et assure un écoulement aérodynamique non perturbé de l'air autour de l'appareil.

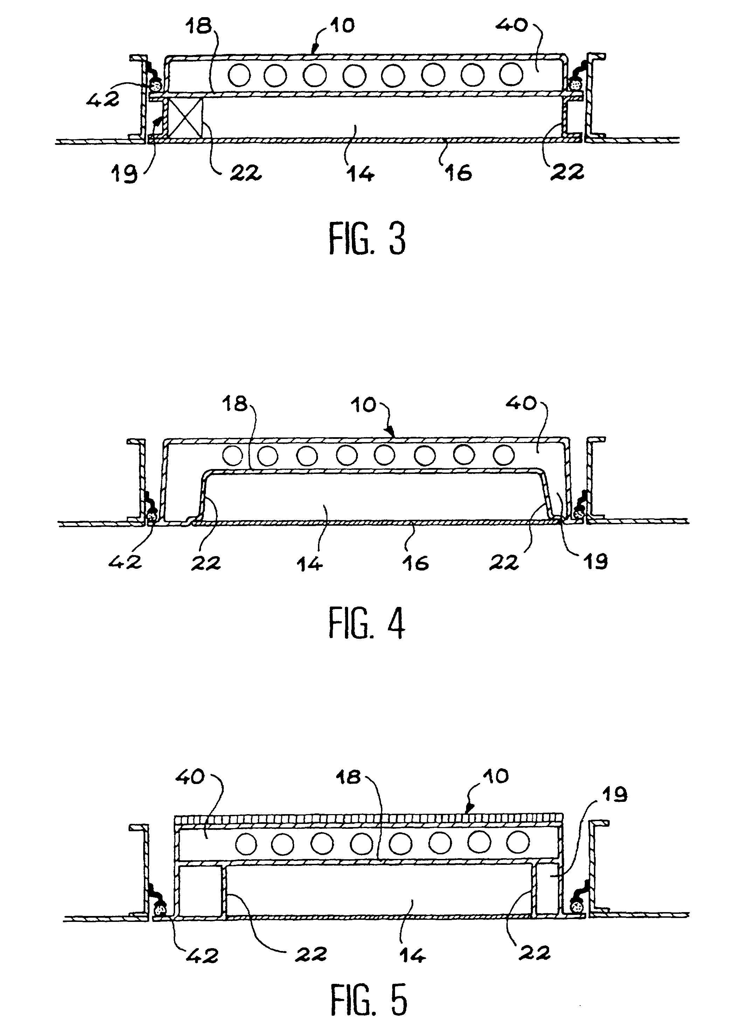

De façon connue, la porte 10 comprend une structure rigide dont une face tournée vers l'extérieur de l'aéronef affleure la surface extérieure du fuselage lorsque la porte est fermée. Conformément à l'invention, la structure rigide de la porte comprend, du côté de sa face extérieure, un évidement formant un logement 14 dans lequel est reçu un toboggan d'évacuation de secours 30 (figure 2), dans un état replié.

De façon plus précise, dans les modes de réalisation illustrés sur les figures 1 à 5, le logement 14 est délimité entre un capot 16 (figure 2) matérialisant une paroi extérieure de la porte 10, tournée vers l'extérieur de l'aéronef et une cloison intermédiaire 18, matérialisant le fond du logement 14. La cloison intermédiaire 18 est sensiblement parallèle au capot 16, de telle sorte que l'épaisseur du logement 14 est sensiblement uniforme, ou constante. De plus, dans ce cas, l'épaisseur du logement 14 est sensiblement égale ou légèrement supérieure à la moitié de l'épaisseur totale de la porte 10, comme le montre notamment la figure 2. Cet agencement permet au logement dans lequel est stocké le toboggan d'occuper la majeure partie de la surface de la porte.

Il est à noter qu'en variante, le logement 14 peut être délimité extérieurement par une enveloppe non structurale placée sur la porte, telle qu'un carénage de bord d'attaque sur une aile volante ou encore un carénage de raccordement voilure-fuselage. Le volume ainsi créé permet alors de recevoir, en totalité ou non, le toboggan dans son état replié, sans réellement amoindrir l'épaisseur de la partie structurale de la porte.

Le logement 14 présente une forme sensiblement rectangulaire et s'étend sur la majeure partie de la hauteur et sur la majeure partie de la largeur de la porte 10.

Plus précisément, le logement 14 est délimité latéralement et vers le haut par un cadre 19. Ce cadre 19 comprend une cloison supérieure 20 et deux cloisons latérales 22.

Du fait que le logement 14 s'étend sur la majeure partie de la surface de la porte 10, il peut présenter un volume égal ou supérieur à celui des logements habituellement prévus pour recevoir les toboggans à l'intérieur des aéronefs, dans le bas de chacune des portes, sans qu'il soit nécessaire d'augmenter exagérément l'épaisseur de la porte 10 par rapport à l'épaisseur d'une porte dépourvue d'un tel logement. Par conséquent, on dégage ainsi un espace appréciable à l'intérieur de la cabine destinée à recevoir les passagers, notamment à proximité du plancher 12. Il devient notamment possible d'implanter des sièges immédiatement derrière la porte. De plus, les mécanismes de commande d'ouverture classiques peuvent être retenus.

Bien entendu, la surface extérieure du capot 16, qui constitue la majeure partie de la surface extérieure de la porte 10, est située, sans discontinuité, dans le prolongement de la surface extérieure du fuselage de l'aéronef.

Les moyens d'armement (non représentés) permettant de relier mécaniquement le toboggan au seuil de la porte lorsque celle-ci est fermée après l'embarquement des passagers peuvent être du même type que ceux qui équipent les aéronefs existants. Il en est de même des moyens permettant de déployer automatiquement le toboggan par gonflement, dans des conditions accidentelles. Comme on l'a illustré schématiquement sur la figure 2, ces moyens peuvent notamment comprendre un réservoir 24 placé en dessous du plancher 12 et contenant un gaz tel que de l'azote. Ce réservoir 24 est relié par un tuyau souple 26 et un venturi 28 au toboggan 30, lorsque les moyens d'armement sont actifs.

Le capot 16 formant la paroi extérieure de la porte 10 est de préférence relié au cadre 19 de la porte par des moyens de fixation déconnectables 36 autorisant son éjection automatique lorsque la procédure de gonflement du toboggan est initiée. A titre d'exemple nullement limitatif, ces moyens de fixation peuvent être du même type que ceux qui relient au fuselage le capot fermant le volume servant à recevoir le toboggan replié dans le document EP-A-0 518 461.

Lorsque le processus de gonflement du toboggan 30 est déclenché, le capot 16 est éjecté. Le toboggan 30 est ensuite gonflé. Enfin, la porte 10 est ouverte pour permettre aux passagers d'évacuer l'appareil.

Les moyens servant à commander l'ouverture et la fermeture de la porte 10 peuvent être constitués par tout moyen connu de l'homme du métier, susceptible d'être utilisé à cette fin sur une porte d'aéronef. Ils ne font pas partie de l'invention et ne seront donc pas décrits.

Comme l'illustre schématiquement la figure 1, l'un des montants du cadre 19, délimité entre l'une des cloisons latérales 22 et le bord latéral correspondant de la porte, présente une largeur suffisante pour permettre d'y intégrer un hublot 32 à fibres optiques par exemple et une poignée 34 accessible depuis l'extérieur de l'aéronef.

Afin d'accroître la hauteur du logement 14 disponible pour le toboggan 30 sans augmenter par ailleurs l'ouverture formée dans le fuselage, le bord inférieur de la porte 10 peut présenter une forme en gradin, telle qu'illustrée sur les figures 1 et 2. Ce bord inférieur en gradin comprend alors une partie haute 38a, vers l'intérieur de l'aéronef et une partie basse 38b, vers l'extérieur de l'aéronef. Ces deux parties 38a et 38b du bord inférieur de la porte sont séparées par la cloison intermédiaire 18. La partie haute 38a est fermée et située au-dessus du plancher 12 de la cabine. La partie basse 38b est ouverte et débouche directement dans le logement 14. Elle est située au-dessus d'une marche 12a, située en contrebas par rapport au plancher 12 de la cabine de l'aéronef.

On décrira à présent, en se référant successivement aux figures 3, 4 et 5, trois modes de réalisation particuliers de la porte selon l'invention.

Dans un premier mode de réalisation, illustré en coupe horizontale sur la figure 3, la cloison intermédiaire 18 fait partie intégrante d'une structure rigide 40 matérialisant la partie de la porte tournée vers l'intérieur de l'aéronef. En revanche, le cadre 19 est rapporté sur cette structure 40 et ne présente pas de rigidité propre.

Par ailleurs, dans ce mode de réalisation de la figure 3, l'étanchéité entre la cabine pressurisée et l'extérieur de l'aéronef est assurée par un joint d'étanchéité 42 placé autour de la porte, sensiblement dans le prolongement de la cloison intermédiaire 18. Le logement 14 dans lequel est reçu le toboggan est alors non pressurisé.

Dans un deuxième mode de réalisation de l'invention illustré sur la figure 4, la cloison intermédiaire 18 ainsi que le cadre 19 font partie intégrante de la structure rigide 40 de la porte 10. Dans ce cas, le joint d'étanchéité 42 placé autour de la porte 10 est situé sensiblement dans le prolongement du capot 16 formant la paroi extérieure de la porte 10. Le logement 14 dans lequel est reçu le toboggan est alors situé dans la zone pressurisée de l'aéronef.

Dans un troisième mode de réalisation de l'invention illustré schématiquement sur la figure 5, la structure de la porte est analogue à celle du mode de réalisation illustré sur la figure 3 et le joint d'étanchéité est disposé de la même manière que dans le deuxième mode de réalisation décrit en référence à la figure 4.

Plus précisément, la cloison de fond 18 fait partie intégrante de la structure rigide 40 de la porte 10, alors que le cadre 19 est rapporté sur cette structure rigide.

En revanche, le joint d'étanchéité 42 est placé autour de la porte 10 sensiblement dans le prolongement du capot 16 formant la paroi extérieure de celle-ci.

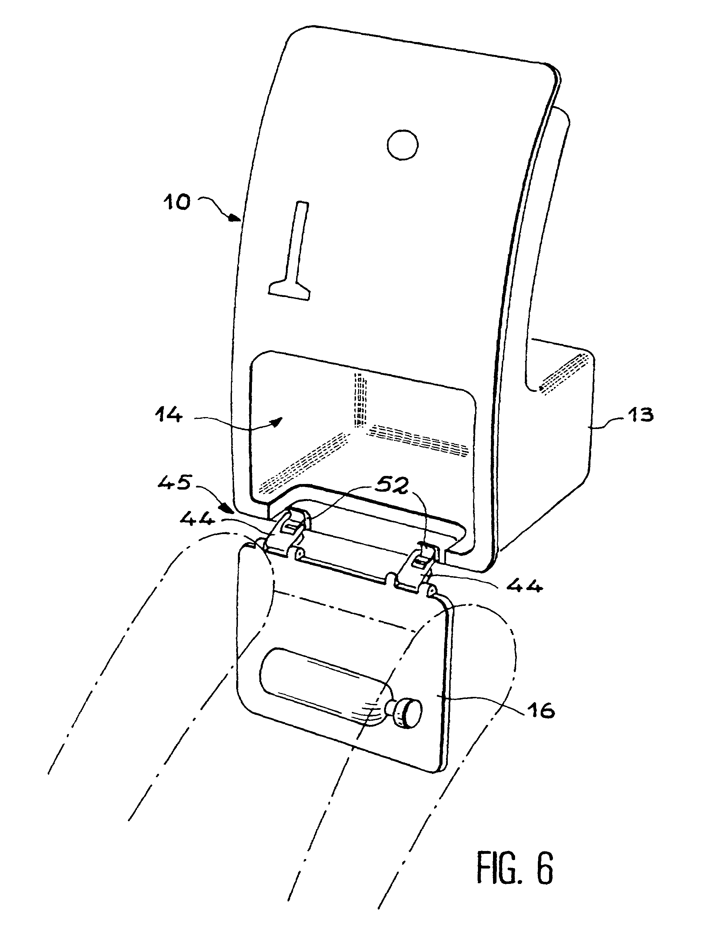

On décrira à présent un quatrième mode de réalisation de l'invention en se référant aux figures 6 à 8. Pour simplifier, les éléments correspondants sont désignés par les mêmes références numériques.

Dans ce cas, le logement 14 est formé dans la partie basse de la structure rigide de la porte 10, à l'intérieur d'un renflement 13 qui fait saillie dans la cabine des passagers, comme sur les portes existantes. Toutefois, conformément à l'invention, ce logement 14 est délimité par un capot 16 sur la face extérieure de la porte.

Le capot 16 est normalement solidarisé de la structure rigide de la porte par des moyens de fixation (non représentés) aptes à autoriser une ouverture rapide du capot lorsque le toboggan stocké à l'état replié dans le logement 14 doit être déployé pour assurer une évacuation d'urgence de l'aéronef. Ces moyens de fixation peuvent être du même type que ceux qui relient le capot 16 à la structure rigide de la porte dans les modes de réalisation décrits précédemment en se référant aux figures 1 à 5.

De plus, des moyens d'armement désarmement 45 sont prévus entre le bord inférieur du capot 16 et le seuil de la porte. Ces moyens d'armement désarmement 45 permettent de relier le bord inférieur du capot au seuil de la porte lorsque la porte est fermée et permettent de supprimer toute liaison entre ces éléments lorsque la porte doit être ouverte pour assurer le chargement et le déchargement des passagers.

Dans le mode de réalisation représenté sur les figures 6 à 8, les moyens d'armement désarmement 45 comprennent deux manilles 44 articulées sur le bcrd inférieur du capot 16 par des axes 46 sensiblement horizontaux. A son extrémité inférieure, chaque manille 44 comprend une tige 48, également sensiblement horizontale.

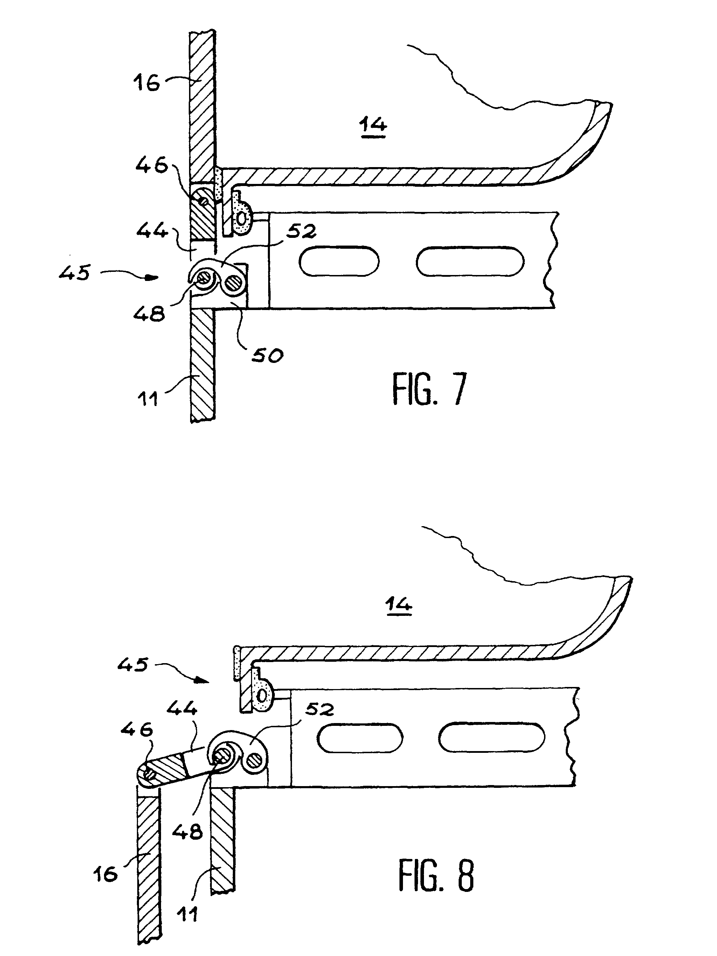

Lorsque la porte 10 est fermée, la tige 48 est en appui contre un réceptacle 50 formé sur le seuil de la porte. Un crochet 52 articulé sur le seuil de la porte peut alors être manoeuvré par le personnel de bord, comme on l'a représenté schématiquement sur la figure 7, pour emprisonner la tige 48 entre le réceptacle 50 et le crochet 52. On crée ainsi une liaison pivotante entre le capot 16 et le seuil de la porte.

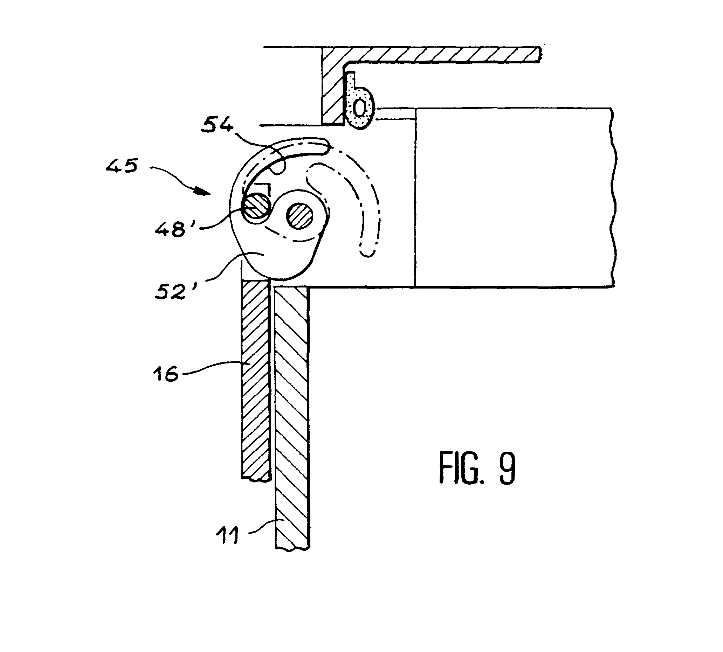

Ainsi, lorsque les moyens d'armement désarmement 45 sont armés et qu'une évacuation d'urgence de l'aéronef doit être effectuée, les moyens de fixation déconnectables (non représentés) qui relient le capot 16 à la structure rigide de la porte sont automatiquement déconnectés et le capot pivote vers le bas, pour passer de la position illustrée sur la figure 7 à la position illustrée sur la figure 8. Le toboggan se déploie alors très rapidement à l'extérieur de l'aéronef par l'ouverture de grande section ainsi ménagée dans la porte.

Lorsque la porte doit être ouverte pour permettre aux passagers d'accéder à l'aéronef, les moyens d'armement désarmement 45 sont désarmés par le personnel de bord, de façon connue, par une manoeuvre des crochets 52.

La variante de réalisation de la figure 9 se distingue essentiellement du mode de réalisation des figures 6 à 8 par le fait que les moyens d'armement désarmement 45 comprennent dans ce cas au moins un axe sensiblement horizontal 48' fixé au bord inférieur du capot 16 et un loquet 52' monté pivotant sur le seuil de la porte. Le loquet 52' présente une fente 54, en arc de cercle, ouverte à l'une de ses extrémités. Le pivotement du loquet 52' dans le sens des aiguilles d'une montre permet d'emprisonner l'axe 48', ce qui a pour effet de relier de façon pivotante le bord inférieur du capot 16 au seuil de la porte. Le désarmement est obtenu par un pivotement en sens inverse du loquet 52'.

Bien entendu, l'invention n'est pas limitée aux modes de réalisation qui viennent d'être décrits à titre d'exemples. Ainsi, on comprendra notamment que la marche 12a peut être supprimée ou remplacée par un plancher incliné, sans sortir du cadre de l'invention.

## Revendications

1. Porte d'aéronef, comprenant une structure rigide (40) présentant une face tournée vers l'extérieur de l'aéronef, ladite structure rigide (40) intégrant un logement (14) apte à recevoir un toboggan d'évacuation de secours (30), dans un état replié, **caractérisée en ce que** le logement (14) est délimité, sur ladite face de la structure rigide (40), par un capot (16) apte à s'ouvrir pour permettre un déploiement du toboggan (30) à l'extérieur de l'aéronef.

2. Porte d'aéronef selon la revendication 1, dans laquelle le logement (14) s'étend sur la majeure partie de la surface de la porte.

3. Porte d'aéronef selon la revendication 2, dans laquelle le logement est délimité, vers l'intérieur de l'aéronef, par une cloison intermédiaire (18) sensiblement parallèle au capot (16), de telle sorte que le logement (14) a une épaisseur sensiblement uniforme.

4. Porte d'aéronef selon la revendication 3, dans laquelle le logement (14) est délimité latéralement et vers le haut par un cadre (19) en forme de U inversé.

5. Porte d'aéronef selon la revendication 4, dans laquelle le capot (16) est lié audit cadre (19) par des moyens de fixation déconnectables (36), de façon à pouvoir être éjecté vers l'extérieur de l'aéronef.

6. Porte d'aéronef selon l'une quelconque des revendications 4 et 5, dans laquelle la cloison intermédiaire (18) et le cadre (19) font partie intégrante de la structure rigide (40).

7. Porte d'aéronef selon l'une quelconque des revendications 4 et 5, dans laquelle la cloison intermédiaire (18) fait partie intégrante de la structure rigide (40) et le cadre (19) est rapporté sur ladite structure.

8. Porte d'aéronef selon l'une quelconque des revendications 3 à 7, dans laquelle des moyens d'étanchéité (42) sont prévus autour de la porte, sensiblement dans le prolongement de la cloison intermédiaire (18)

9. Porte d'aéronef selon l'une quelconque des revendications 3 à 7, dans laquelle des moyens d'étanchéité (42) sont prévus autour de la porte, sensiblement dans le prolongement dudit capot (16).

10. Porte d'aéronef selon l'une quelconque des revendications précédentes, dans laquelle ladite porte comprend un bord inférieur en gradin, comportant une partie intérieure fermée et une partie extérieure ouverte, communiquant avec ledit volume (14) et décalée vers le bas par rapport à la partie intérieure fermée.

11. Porte d'aéronef selon la revendication 1, dans laquelle le capot (16) est lié à la structure rigide (40) par des moyens de fixation déconnectables (36) et des moyens d'armement désarmement (45) sont prévus entre un bord inférieur du capot (16) et le seuil de la porte.

12. Porte d'aéronef selon la revendication 11, dans laquelle les moyens d'armement désarmement (45) comprennent au moins une manille (44) montée sur le bord inférieur du capot (16), un réceptacle (50) formé sur le seuil de la porte et un crochet (52) articulé sur le seuil de la porte, de façon à pouvoir emprisonner la manille entre le réceptacle et le crochet.

13. Porte d'aéronef selon la revendication 11, dans laquelle les moyens d'armement désarmement (45) comprennent au moins un axe (48') monté sur le bord inférieur du capot (16) et un loquet (52') à fente (54), monté pivotant sur le seuil de la porte, de façon à pouvoir emprisonner ledit axe dans la fente du loquet.

14. Aéronef comprenant au moins une porte (10) selon l'une quelconque des revendications précédentes.

## Patentansprüche

1. Luftfahrzeugtür mit einer starren Struktur (40), die eine vom Luftfahrzeug nach außen gewandte Fläche aufweist, wobei in die starre Struktur (40) ein Sitz bzw. eine Aufnahme (14) integriert ist, der/die eine Hilfs-Ausstiegs- bzw. Entleerungsrutsche (30) in einem gefalteten Zustand aufnehmen kann,
**dadurch gekennzeichnet, dass** der Sitz (14) an der Fläche der starren Struktur (40) durch eine Abdeckhaube (16) begrenzt ist, die sich öffnen kann, um ein Entfalten der Rutsche (30) vom Luftfahrzeug nach außen zu ermöglichen.

2. Luftfahrzeugtür nach Anspruch 1, wobei die Aufnahme (14) sich über den Großteil der Oberfläche der Tür erstreckt.

3. Luftfahrzeugtür nach Anspruch 2, wobei die Aufnahme zum Innenraum des Luftfahrzeugs durch eine Zwischenwand (18) begrenzt ist, die im wesentlichen parallel zu der Abdeckhaube (16) ist, so dass die Aufnahme (14) eine im wesentlichen gleichmäßige Stärke aufweist.

4. Luftfahrzeugtür nach Anspruch 3, wobei die Aufnahme (14) lateral und nach oben von einem Rahmen (19) in Form eines umgekehrten U begrenzt ist.

5. Luftfahrzeugtür nach Anspruch 4, wobei die Abdeckhaube (16) mit dem Rahmen (19) über trennbare Befestigungsmittel (36) so verbunden ist, dass sie vom Flugzeug nach außen ausgestoßen bzw. ausgefahren werden kann.

6. Luftfahrzeugtür nach einem der Ansprüche 4 oder 5, wobei die Zwischenwand (18) und der Rahmen (19) einen integralen Teil der starren Struktur (40) bilden.

7. Luftfahrzeugtür nach einem der Ansprüche 4 oder 5, wobei die Zwischenwand (18) einen integralen Teil der starren Struktur (40) bildet und der Rahmen (19) auf die Struktur aufgesetzt ist.

8. Luftfahrzeugtür nach einem der Ansprüche 3 bis 7, wobei Dichtungsmittel (42) um die Tür herum im wesentlichen in der Verlängerung der Zwischenwand (18) vorgesehen sind.

9. Luftfahrzeugtür nach einem der Ansprüche 3 bis 7, wobei die Dichtungsmittel (42) um die Tür herum im wesentlichen in der Verlängerung der Abdeckhaube (16) vorgesehen sind.

10. Luftfahrzeugtür nach einem der vorangehenden Ansprüche, wobei die Tür einen abgestuften unteren Rand umfasst, welcher einen geschlossenen Innenteil und einen offenen Außenteil, der mit dem Volumen (14) in Verbindung steht und nach unten in bezug auf den geschlossenen Innenteil versetzt ist, aufweist.

11. Luftfahrzeugtür nach Anspruch 1, wobei die Abdeckhaube (16) mit der starren Struktur (40) über lösbare Befestigungsmittel (36) verbunden ist, und Feststell/Freigabemittel (45) zwischen einem unteren Rand der Abdeckhaube (16) und der Türschwelle vorgesehen sind.

12. Luftfahrzeugtür nach Anspruch 11, wobei die Feststell/Freigabemittel (45) mindestens einen an dem unteren Rand der Abdeckhaube (16) angebrachten Schäkel bzw. Kupplungsbügel (44), eine in der Türschwelle ausgebildete Ausnehmung (50) und einen an der Türschwelle angelenkten Haken (59) umfasst, so dass der Schäkel zwischen der Ausnehmung und dem Haken arretiert bzw. festgestelt werden kann.

13. Luftfahrzeugtür nach Anspruch 11, wobei die Feststell-Freigabemittel (45) mindestens eine am unteren Rand der Abdeckhaube (16) angebrachte Achse (48') sowie ein Verriegelungselement (52') mit Schlitz (54), das dreh/schwenkbar an der Türschwelle angebracht ist, umfasst, so dass die Achse in dem Schlitz des Verriegelungselements arretiert werden kann.

14. Luftfahrzeug mit mindestens einer Tür (10) gemäß einem der vorangehenden Ansprüche.

## Claims

1. An aircraft door, including a rigid structure (40) having a face facing outwards from the aircraft, said rigid structure (40) incorporating a housing (14) able to receive an emergency evacuation slide (30), in a folded up state, **characterised in that** the housing (14) is delimited, on said face of the rigid structure (40), by a cover (16) able to open to allow deployment of the slide (30) outwards from the aircraft.

2. An aircraft door according to claim 1, wherein the housing (14) extends over the greater part of the door surface.

3. An aircraft door according to claim 2, wherein the housing is delimited, towards the interior of the aircraft, by an intermediate bulkhead (18) approximately parallel to the cover (16), so that the housing (14) has an approximately uniform thickness.

4. An aircraft door according to claim 3, wherein the housing (14) is delimited laterally and upwards by an inverted U-shaped frame (19).

5. An aircraft door according to claim 4, wherein the cover (16) is attached to said frame (19) by detachable fixing means (36), so as to be able to be ejected outwards from the aircraft.

6. An aircraft door according to any one of claims 4 and 5, wherein the intermediate bulkhead (18) and the frame (19) are an integral part of the rigid structure (40).

7. An aircraft door according to any one of claims 4 and 5, wherein the intermediate bulkhead (18) is an integral part of the rigid structure (40) and the frame (19) is added onto said structure.

8. An aircraft door according to any one of claims 3 to 7, wherein tightness means (42) are provided around the door, approximately in the extension of the intermediate bulkhead (18).

9. An aircraft door according to any one of claims 3 to 7, wherein tightness means (42) are provided around the door, approximately in the extension of said cover (16).

10. An aircraft door according to any one of the previous claims, wherein said door includes a lower stepped edge, comprising a closed inner part and an open outer part, communicating with said volume (14) and offset downwards relative to the closed inner part.

11. An aircraft door according to claim 1, wherein the cover (16) is attached to the rigid structure (40) by detachable fixing means (36) and setting de-setting means (45) are provided between a lower edge of the cover (16) and the door threshold.

12. An aircraft door according to claim 11, wherein the setting de-setting means (45) include at least one shackle (44) mounted on the lower edge of the cover (16), a receptacle (50) formed on the door threshold and a hook (52) articulated on the door threshold, so as to be able to trap the shackle between the receptacle and the hook.

13. An aircraft door according to claim 11, wherein the setting de-setting means (45) include at least one pin (48') mounted on the lower edge of the cover (16) and a latch (52') with a slot (54), swivel mounted on the door threshold, so as to be able to trap said pin in the latch slot.

14. An aircraft including at least one door (10) according to any one of the previous claims.
